# EUROPEAN PATENT APPLICATION

(11) **EP 4 484 276 A1**
(43) Date of publication of application: **01.01.2025**
(21) Application number: 24182395.4
(22) Date of filing: 14.06.2024
(51) Int. Cl.: B64C 1/14, B64D 11/02

(54) **PREMIUM AND ACCESSIBLE LAVATORY WITH INCREASED DOOR OPENING**

(30) Priority: 29.06.2023 US 202318344738
(71) Applicant: B/E Aerospace, Inc., Winston-Salem, NC 27105 (US)
(72) Inventor: MARLEY, Scott, Edmonds, WA, 98020 (US); VETTER, Jakob J., Snohomish, 98290 (US); BARRAL RUIZ, Raquel, Kirkland, 98034 (US)
(74) Representative: Dehns

(57) **Abstract**

An aircraft lavatory is disclosed herein. The aircraft lavatory includes an access door (204, 304) providing access to the aircraft lavatory from at least one of an aisle, a cross aisle, or a passageway of an aircraft, wherein the access door (204, 304) is configured to rotate from a closed position to an open position in a first direction and a moveable wall (206, 306, 406) disposed adjacent the access door (204, 304), the moveable wall (206, 306, 406) being configured to rotate from a closed position to an open position in a second direction that is opposite the first direction, the moveable wall (206, 306, 406) being configured to receive and secure the access door (204, 304) while the moveable wall (206, 306, 406) is in the closed position, wherein an opening configured to allow ingress of a mobility device into the aircraft lavatory is created in response to the access door (204, 304) being in the open position and the moveable wall (206, 306, 406) being in the open position.

## Description

### FIELD

The present disclosure generally relates aircraft lavatories, and more particularly, to aircraft lavatory access for persons with reduced mobility.

### BACKGROUND

A lavatory complex installed in an aircraft may be located against an outboard wall portion of an aircraft passenger cabin as well as the rear of the aircraft abutting the pressure dome. For ease of manufacture and ease of installation adjacent other interior structures, aircraft lavatories typically have flat walls on all sides facing the aircraft interior as defined by the lavatory envelope. Aircraft lavatories are typically located adjacent a doorway emergency exit path, such as abutting the cockpit bulkhead.

To provide a space for a crew member to stand by an emergency exit door for the purpose assisting passengers during an emergency evacuation of an aircraft, airworthiness authorities require that a 12-inch (30.5 centimeters) by 20-inch (50.8 centimeters) "assist space" be provided adjacent the aircraft exit doorway, alongside the exit path but outside the exit path itself. Attendant seats, occupied by flight attendants during takeoff, landing and at other times are typically mounted inboard of the assist spaces near the exit paths. The attendant seats most typically fold upward to a stowed position when not occupied so as to remain clear of the exit path.

A variety of techniques have been employed for transferring a mobility-impaired passenger between an aisle wheelchair and a toilet. A 90° transfer in which the aisle wheelchair is positioned at a 90° angle to the toilet and an assistant lifts the mobility-impaired passenger and rotates the passenger onto the toilet, and vice versa, has been found to reduce the risk of injury to the assistant and is, therefore, a favored method for assisted transfers. A lateral transfer, in which a mobility-impaired passenger slides sideways from wheelchair to toilet and vice versa can be favored for an unassisted transfer in which the mobility-impaired passenger prefers to make the transfer unaided and has the upper body strength to do so.

Existing lavatory solutions for persons with reduced mobility (PRM) include a wall at a centerline of the lavatory complex on a twin aisle aircraft, and a dedicated aft lavatory or galley complex on a narrow body aircraft. PRM lavatories, located against the outboard wall portion of the aircraft, are typically single oversized units which occupy an enlarged footprint in the aircraft cabin.

### SUMMARY

An aircraft lavatory is disclosed herein. The aircraft lavatory includes an access door providing access to the aircraft lavatory from at least one of an aisle, a cross aisle, or a passageway of an aircraft, wherein the access door is configured to rotate from a closed position to an open position in a first direction and a moveable wall disposed adjacent the access door, the moveable wall being configured to rotate from a closed position to an open position in a second direction that is opposite the first direction, the moveable wall being configured to receive and secure the access door while the moveable wall is in the closed position, wherein an opening configured to allow ingress of a mobility device into the aircraft lavatory is created in response to the access door being in the open position and the moveable wall being in the open position.

In various embodiments, the access door is a slab door. In various embodiments, the access door is a bifold door. In various embodiments, the access door has a first width and the moveable wall has a second width that is smaller than the first width. In various embodiments, the first width is about 18 inches to about 30 inches and the second width is about 9 inches to about 15 inches.

In various embodiments, the access door is configured to be operated independent from the moveable wall such that the access door is configured to rotate to an open position while the moveable wall remains in the closed position. In various embodiments, the moveable wall includes a latch system configured to secure the moveable wall to a ceiling of the aircraft lavatory and a floor of the aircraft lavatory when the moveable wall is in the closed position. In various embodiments, the access door is interchangeable between a slab door and a bifold door.

In various embodiments, the access door extends in a third direction when in the closed position and the moveable wall extends in the third direction when in the closed position. In various embodiments, the opening does not allow ingress of the mobility device in response to the access door being in the open position and the moveable wall being in the closed position.

Also disclosed herein is an aircraft including at least one lavatory. The at least one lavatory includes an access door providing access to the at least one lavatory from at least one of an aisle, a cross aisle, or a passageway of the aircraft, wherein the access door is configured to rotate from a closed position to an open position in a first direction and a moveable wall disposed adjacent the access door, the moveable wall being configured to rotate from a closed position to an open position in a second direction that is opposite the first direction, the moveable wall being configured to receive and secure the access door while the moveable wall is in the closed position, wherein an opening configured to allow ingress of a mobility device into the at least one lavatory is created in response to the access door being in the open position and the moveable wall being in the open position.

In various embodiments, the access door is a slab door. In various embodiments, the access door is a bifold door. In various embodiments, the access door has a first width and the moveable wall has a second width that is smaller than the first width. In various embodiments, the first width is about 18 inches to about 30 inches and the second width is about 9 inches to about 15 inches. In various embodiments, the access door is configured to be operated independent from the moveable wall such that the access door is configured to rotate to an open position while the moveable wall remains in the closed position.

In various embodiments, the moveable wall includes a latch system configured to secure the moveable wall to a ceiling of the at least one lavatory and a floor of the at least one lavatory when the moveable wall is in the closed position. In various embodiments, the access door is interchangeable between a slab door and a bifold door. In various embodiments, the access door extends in a third direction when in the closed position and the moveable wall extends in the third direction when in the closed position. In various embodiments, the opening does not allow ingress of the mobility device in response to the access door being in the open position and the moveable wall being in the closed position.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B illustrate partial top views of an aircraft cabin with exemplary lavatory monuments, in accordance with various embodiments.
FIGS. 2A and 2B illustrate top views of a lavatory in an aircraft for persons with reduced mobility, in accordance with various embodiments.
FIGS. 2C and 2D illustrate perspective views of a lavatory in an aircraft for persons with reduced mobility, in accordance with various embodiments.
FIGS. 3A and 3B illustrate top views of a lavatory in an aircraft for persons with reduced mobility, in accordance with various embodiments.
FIGS. 3C and 3D illustrate perspective views of a lavatory in an aircraft for persons with reduced mobility, in accordance with various embodiments.
FIG. 4 illustrates a latching mechanism for a moveable door of a lavatory in an aircraft for persons with reduced mobility, in accordance with various embodiments.
FIG. 5 illustrates latching mechanisms on a movable wall of a lavatory monument, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Commercial aircraft are beginning to include wheelchair spots that can be occupied by a person with reduced mobility (PRM) in a power wheelchair with the wheelchair restrained to the floor. This allows the PRM passenger to board and deboard the aircraft in the comfort of their own wheelchair as outfitted to suit their physical needs. The use of these wheelchair spots introduces an issue with using the lavatory on the aircraft as wheelchairs do not generally fit down the aisles of the aircraft or in the lavatories of the aircraft.

Disclosed herein are PRM lavatories for use by PRM passengers. In various embodiments, the PRM lavatories may accommodate passengers using standard size wheelchairs, large wheelchairs, and powered wheelchairs that do not fit through the doorway of conventional aircraft lavatories. In various embodiments, the PRM lavatory may occupy the same footprint as existing aircraft lavatories. In various embodiments, the PRM lavatory may be located at one of several locations in an aircraft. In various embodiments, the PRM lavatory may be configured to be accessible from various sides of the PRM lavatory. In various embodiments, the aircraft lavatory includes a standard access door and a moveable wall. In various embodiments, the standard access door may be a slab door. In various embodiments, the standard access door may be a bifold door. In various embodiments, the moveable wall may be concealed. In various embodiments, the moveable wall may be operated by aircrew, flight attendants, and/or permitted companions.

In various embodiments, the standard access door and the moveable wall extend in the same direction when in a closed position. In various embodiments, the standard access door and the moveable wall are configured to rotate from the closed position to the open position. In various embodiments, the standard access door and the moveable are configured to rotate in opposite directions, creating an opening that allow ingress of a mobility device into the aircraft lavatory. In various embodiments, the slab door and the bifold door may be interchangeable. In various embodiments, the moveable wall includes a latch system that secures the moveable wall to the aircraft ceiling and the aircraft floor, or lavatory ceiling and lavatory floor, when in the closed position.

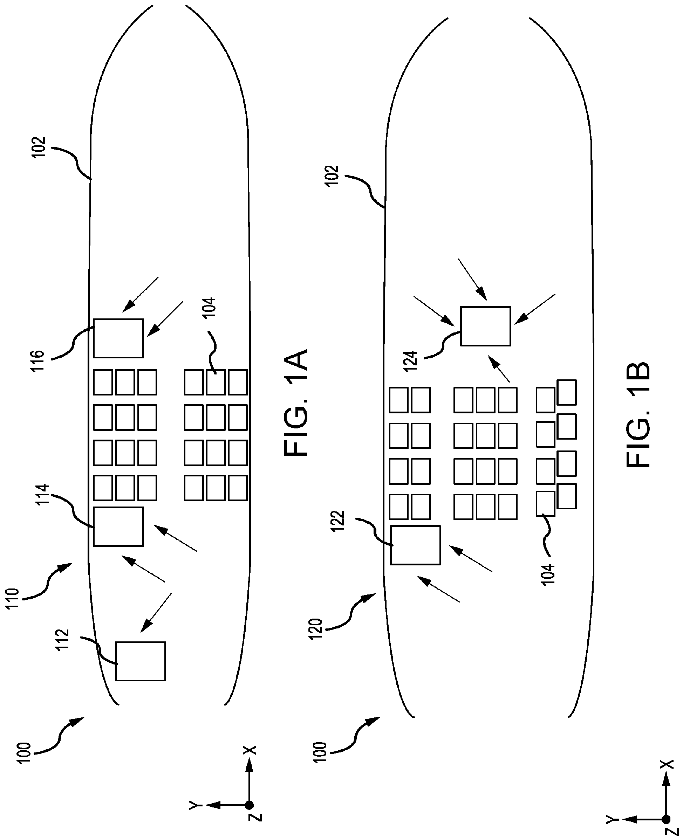

Referring now to FIGS. 1A and 1B, partial top views of an aircraft 100 with exemplary lavatory monuments is illustrated, in accordance with various embodiments. Aircraft 100 includes an outer wall 102 and a plurality of passenger seats 104. FIG. 1A illustrates a first cabin configuration 110 of aircraft 100 including lavatory monuments 112, 114, 116. FIG. 1B illustrates a second cabin configuration 120 of aircraft 100 including lavatory monuments 122, 124. As illustrated, lavatory monuments 112, 114, 116, 122 are against outer wall 102, lavatory monuments 114, 116, 122, 124 are located adjacent passenger seats 104, and lavatory monument 124 is centered between outer walls 102 of aircraft 100. Lavatory monuments 112, 114, 122 are located approximately toward the front of aircraft 100 (e.g., in the negative x-direction) and lavatory monuments 116, 124 are located approximately toward the middle or rear of aircraft 100 (e.g., in the positive x-direction). Arrows pointing at each lavatory monument 112, 114, 116, 122, 124 indicate potential access locations to each lavatory monument 112, 114, 116, 122, 124 based on their respective locations within aircraft 100.

Each lavatory monument 112, 114, 116, 122, 124 may be configured to provide access to persons with reduced mobility, or PRM access, including the use of a PRM mobility device, such as a wheelchair, electric wheelchair, or scooter, among others, entering one or more lavatory monuments 112, 114, 116, 122, 124. In various embodiments, one or more lavatory monuments 112, 114, 116, 122, 124 may be configured to include a door and a moveable wall to allow the PRM passenger and PRM mobility device to enter the one or more lavatory monuments 112, 114, 116, 122, 124. That is, the door may be used by passengers to access lavatory monuments 112, 114, 116, 122, 124 and the moveable wall may be opened at the same time as the door to allow PRM passengers access to lavatory monuments 112, 114, 116, 122, 124. In that regard, the PRM passenger may enter the one or more lavatory monuments 112, 114, 116, 122, 124 and transfer from the PRM mobility device to a toilet within lavatory monument 112 with minimal assistance. In the various embodiments, an area between the lavatory monuments 112, 114, 116, 122, 124 is an open area with sufficient space for maneuvering a PRM mobility device, for example, a wheelchair. Note that the drawing is not necessarily shown to scale and is merely illustrative of possible configurations of lavatory monuments 112, 114, 116, 122, 124 in aircraft 100.

Configuration of the aisle, cross aisle, passageway, and passenger seats 104 may be in any suitable arrangement that permits ingress and egress to the one or more lavatory monuments 112, 114, 116, 122, 124. In various embodiments, lavatory monuments may be located in an aft portion of the aircraft (e.g., in the positive x-direction and/or near the pressure dome), or in a forward portion of the aircraft (e.g., in the negative x-direction and immediately aft of the cockpit).

In various embodiments, lavatory monuments 112, 114, 116, 122, 124, for example, may be designed for lateral installation, with the closed doors of lavatory monuments 112, 114, 116, 122, 124 facing forward or aft, depending on configuration in the fuselage. In various embodiments, the lavatory compartment doors (in the closed position) may be oriented to be parallel to an aisle, cross aisle, or passageway, such as the center aisle that runs longitudinally from front to aft in a commercial aircraft.

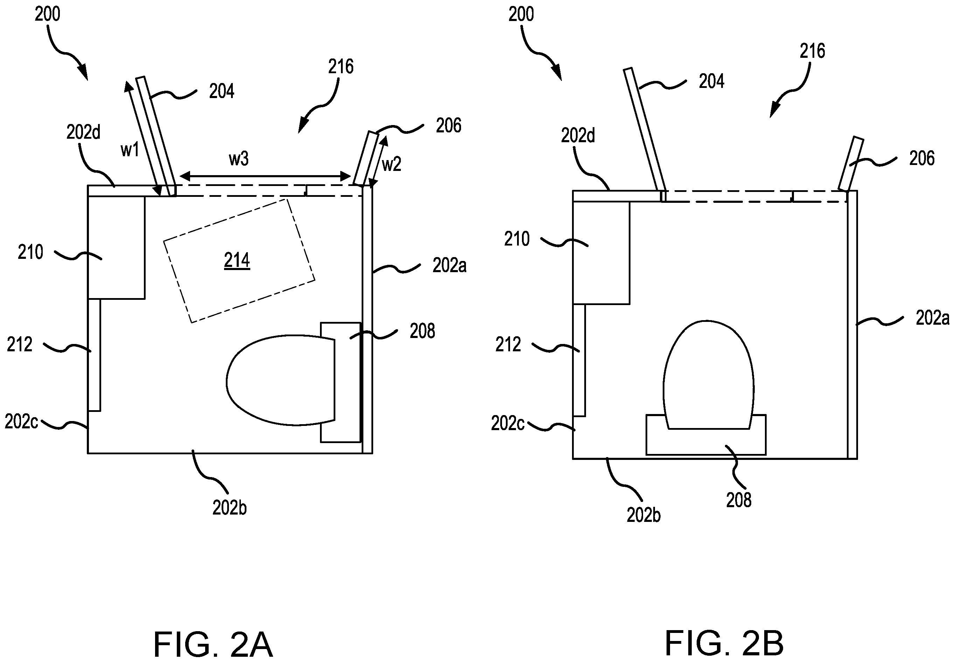

Referring now to FIGS. 2A-2D, top down and perspective views of an aircraft lavatory for persons with reduced mobility, PRM lavatory 200, are illustrated, in accordance with various embodiments. In various embodiments, PRM lavatory 200 may be an example of lavatory monuments 112, 114, 116, 122, 124. In various embodiments, PRM lavatory 200 may be located forward, center, and/or aft in aircraft 100 as described above in FIGS. 1A and 1B. In various embodiments, PRM lavatory 200 may be oriented in one of several directions (i.e., access location of PRM lavatory 200) within aircraft 100 depending on the location of PRM lavatory 200 as indicated by the arrows in FIGS. 1A and 1B.

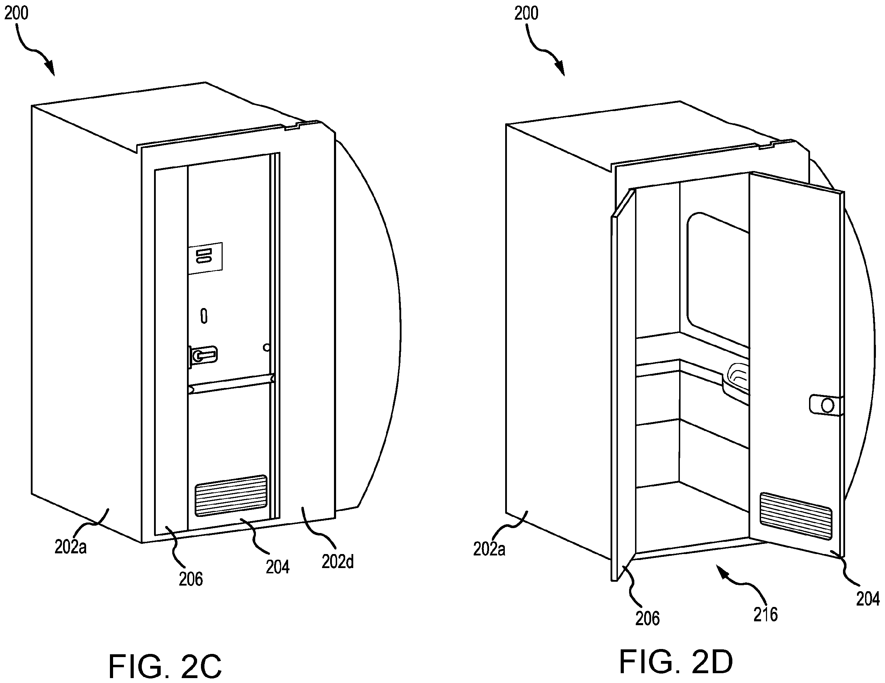

PRM lavatory 200 includes stationary outer walls 202a-202d, a standard access door 204, a moveable wall 206, a toilet 208, a sink 210, a monument 212, and a space 214 for a PRM mobility device, such as a wheelchair or scooter. In various embodiments, sink 210 may be a standard lavatory sink. In various embodiments, sink 210 may be an access sink including space underneath for a PRM mobility device allowing a PRM passenger to use sink 210. In various embodiments, monument 212 may be a mirror, a counter, a towel dispenser, or other lavatory monument. In various embodiments, space 214 is sized to permit a PRM mobility device to completely enter PRM lavatory 200. FIG. 2A is a top down view of PRM lavatory 200 that illustrates toilet 208 along outer wall 202a. FIG. 2B is a top down view of PRM lavatory that illustrates toilet 208 along outer wall 202b. FIG. 2C is a perspective view of PRM lavatory 200 with standard access door 204 and moveable wall 206 in the closed position. FIG. 2D is a perspective view of PRM lavatory 200 with standard access door 204 and moveable wall 206 in the open position. It should be appreciated that PRM lavatory 200 may be oriented in different directions such that standard access door 204 and moveable wall 206 may be coupled to a different stationary outer wall 202a-202d.

Standard access door 204 is a slab door (i.e., a monolithic door or single piece door) that is rotatably coupled to outer wall 202d, such as for example, by one or more hinges. Moveable wall 206 is rotatably coupled to outer wall 202a, such as for example, by one or more hinges. Moveable outer wall 206 is configured to be secured to a floor and a ceiling of PRM lavatory 200, such as by a latch or other mechanism, when in a closed position. Standard access door 204 is configured to be secured to moveable wall 206, such as by a latch and handle, when in a closed position. During operation of PRM lavatory 200, standard access door 204 and moveable wall 206 are in a closed position with each providing structural support for PRM lavatory 200. Standard access door 204 may be opened using a handle, as is in a conventional lavatory, which unlatches standard access door 204 from moveable wall 206 and allows standard access door 204 to rotate to an open position creating an opening 216 into PRM lavatory 200 for a passenger to enter or exit. In various embodiments, standard access door 204 is configured to open in a first direction and moveable wall 206 is configured to open in a second direction such that moveable wall 206 opens away from standard access door 204. In various embodiments, standard access door 204 and moveable wall 206 extend in the same direction when in the closed position.

Moveable wall 206 may include components to conceal the one or more hinges and latches such that movable wall 206 blends in visually with the surrounding stationary outer walls 202a-202d. Moveable wall 206 may be unlatched by a flight attendant, a crew member, or other assistant, allowing moveable wall 206 to rotate into an open position. Opening moveable wall 206 increases a size of opening 216 to accommodate the PRM mobility device and the PRM passenger. With both standard access door 204 and moveable wall 206 in the open position, outer walls 202a-202d provide the structural support for PRM lavatory 200. In various embodiments, curtains may be affixed to one or both of standard access door 204 and moveable wall 206 to provide additional privacy to the PRM passenger.

Standard access door 204 has a first width w1, moveable wall 206 has a second width w2, and opening 216 has a third width w3. In various embodiments, first width w1 is about 18 inches (about 45.7 centimeters) to about 30 inches (about 76.2 centimeters). In various embodiments, second width is about 9 inches (about 22.9 centimeters) to about 15 inches (about 38.1 centimeters). In various embodiments, when standard access door 204 is in the open position, third width w3 is about 18 inches (about 45.7 centimeters) to about 30 inches (about 76.2 centimeters). In various embodiments, when both standard access door 204 and moveable wall 206 are in the open position, third width is about 27 inches (about 68.6 centimeters) to about 45 inches (about 114 centimeters).

As disclosed herein, PRM lavatory 200 including standard access door 204 and moveable wall 206 make use of standard parts, is easier to operate, has lower loads (e.g., decompression loads), is not noticeable to passengers, is easier to operate, and may be placed in standard lavatory positions in aircraft 100. In contrast, using a larger slab door having a width equal to third width w3 to allow access for the PRM mobility device may result in heavier doors, non-standard parts, higher loads (e.g., decompression load), and fewer installation locations due to the larger door.

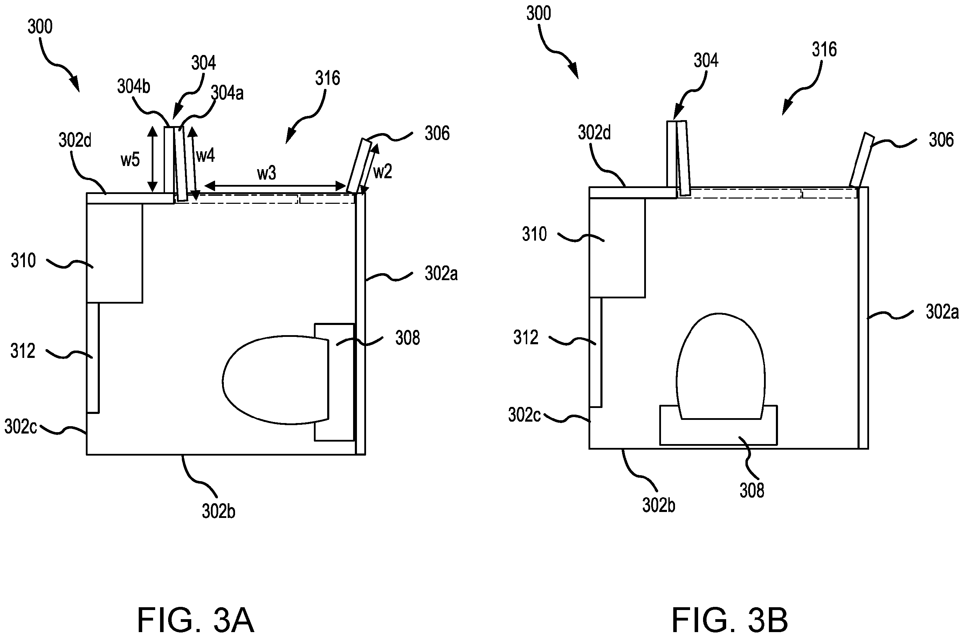

Referring now to FIGS. 3A-3D, top down and perspective views of an aircraft lavatory for persons with reduced mobility, PRM lavatory 300, are illustrated, in accordance with various embodiments. In various embodiments, PRM lavatory 300 may be an example of lavatory monuments 112, 114, 116, 122, 124. In various embodiments, PRM lavatory 300 may be located forward, center, and/or aft in aircraft 100 as described above in FIGS. 1A and 1B. In various embodiments, PRM lavatory 300 may be oriented one of several directions (i.e., access location of PRM lavatory 300) within aircraft 100 depending on the location of PRM lavatory 300 as indicated by the arrows in FIGS. 1A and 1B.

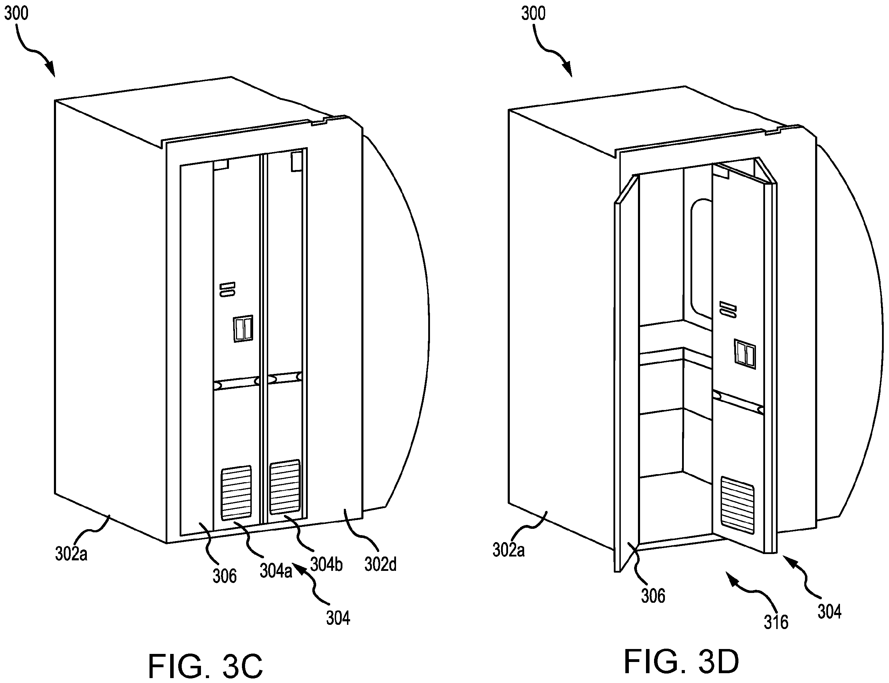

PRM lavatory 300 includes similar components to those described above with respect to PRM lavatory 200 in FIGS. 2A-2D, including outer walls 302a-302d, a moveable wall 306, a toilet 308, a sink 310, a monument 312, an opening 316, and a space 314 for a PRM mobility device, such as a wheelchair or scooter, descriptions of which may not be repeated below. PRM lavatory 300 further includes a bifold access door 304. FIG. 3A is a top down view of PRM lavatory 300 that illustrates toilet 308 along outer wall 302a. FIG. 3B is a top down view of PRM lavatory that illustrates toilet 308 along outer wall 302b. FIG. 3C is a perspective view of PRM lavatory 300 with bifold access door 304 and moveable wall 306 in the closed position. FIG. 3D is a perspective view of PRM lavatory 300 with standard access door 304 and moveable wall 306 in the open position. It should be appreciated that PRM lavatory 300 may be oriented in different directions such that bifold access door 304 and moveable wall 306 may be coupled to a different stationary outer wall 302a-302d.

Bifold access 304 is a bifold door that is rotatably coupled to outer wall 202d, such as for example, by one or more hinges. Bifold access door 304 includes a first portion 304a and a second portion 304b that are in line with each other when in a closed position and fold together, adjacent or parallel with each other, when in an open position. Bifold access door 304, and more specifically first portion 304a, is configured to be secured to moveable wall 306, such as by a latch and handle, when in the closed position. During operation of PRM lavatory 300, bifold access door 304 and moveable wall 306 are in the closed position with each providing structural support for PRM lavatory 300. Bifold access door 304 may be opened using a handle, as is in a conventional lavatory, which unlatches bifold access door 304 from moveable wall 306 and allows bifold access door 304 to rotate and fold into the open position creating opening 316 into PRM lavatory 300 for a passenger to enter or exit.

First portion 304a of bifold access door 304 has a fourth width w4, second portion 304b of bifold access door 304 has a fifth width w5, moveable wall 306 has second width w2, and opening 316 has third width w3. In various embodiments, fourth width w4 is about 9 inches (about 22.9 centimeters) to about 15 inches (about 38.1 centimeters). In various embodiments, fifth width w5 is about 9 inches (about 22.9 centimeters) to about 15 inches (about 38.1 centimeters). In various embodiments, fourth width w4 and fifth width w5 may be about equal. In various embodiments, fourth width w4 may be larger or smaller than fifth width w5. In various embodiments, second width is about 9 inches (about 22.9 centimeters) to about 15 inches (about 38.1 centimeters). In various embodiments, when bifold access door 304 is in the open position, third width w3 is about 18 inches (about 45.7 centimeters) to about 30 inches (about 76.2 centimeters). In various embodiments, when both bifold access door 304 and moveable wall 306 are in the open position, third width is about 27 inches (about 68.6 centimeters) to about 45 inches (about 114 centimeters).

In various embodiments, bifold access doors 304 may be configured to be removed from PRM lavatory 300 and replaced with standard access door 204 with no modifications to moveable wall 306 or PRM lavatory 300. In various embodiments, standard access door 204 of PRM lavatory 200 may be configured to be removed from PRM lavatory 200 and replaced with bifold access door 304 with no modifications to moveable wall 206 or PRM lavatory 200.

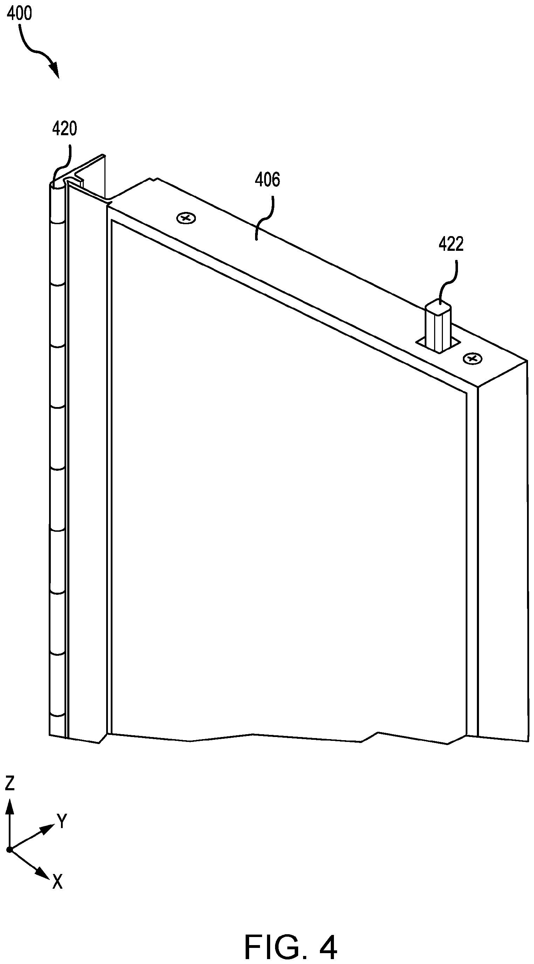

Referring now to FIG. 4, a perspective view of a latching system 400 for use in an aircraft lavatory for persons with reduced mobility (e.g., PRM lavatory 200, PRM lavatory 300) is illustrated, in accordance with various embodiments. In various embodiments, latching system 400 may be used by moveable wall 206 and/or moveable wall 306. Latching system 400 includes a moveable wall 406, a hinge 420, and a latch mechanism 422. Moveable wall 406 may be an example of moveable wall 206 and/or moveable wall 306. In various embodiments, hinge 420 may be a piano hinge, multiple hinges, and/or hidden hinges.

In various embodiments, latch mechanism 422 may be configured to extend from a top portion of moveable wall 406 (e.g., in the positive z-direction) and from a bottom portion of moveable wall 406 (e.g., in the negative z-direction). Latch mechanism 422 may be configured to secure moveable wall 406 and provide structural support for PRM lavatory 200, 300 during taxi, takeoff, landing, during flight, in a crash, and during a decompression event. Latch mechanism 422 may be extended and retracted using a key, a handle, or other mechanism.

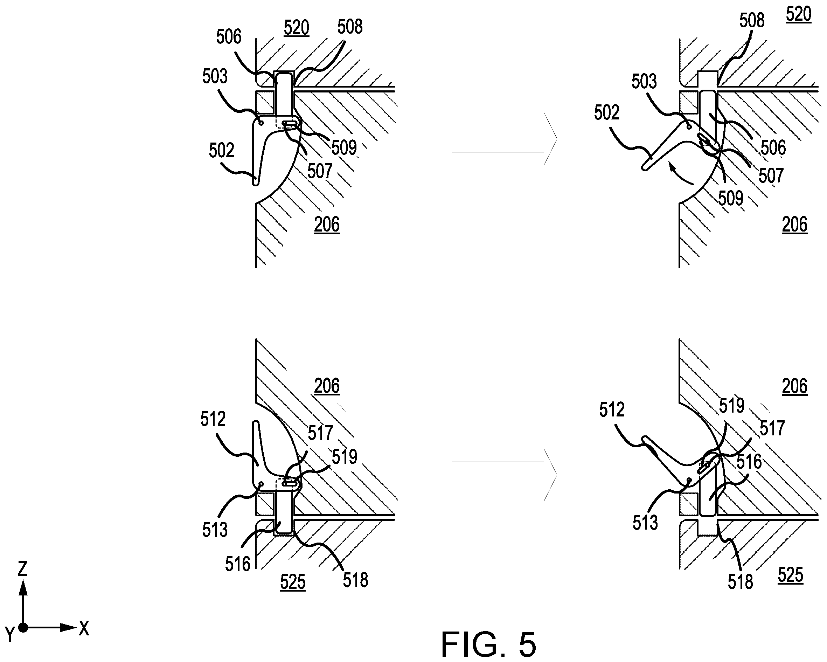

Referring now to FIG. 5, illustrated are latching mechanisms for use in a lavatory for persons with reduced mobility, PRM lavatory 200, 300, in accordance with various embodiments. In various embodiments, handle 502 includes a first portion that extends in a first direction (e.g., in the negative z-direction), and a second portion that extends in a second direction (e.g., in the positive x-direction), that is perpendicular to the first portion. In various embodiments, handle 502 is pivotably coupled to moveable wall 206 (as well as moveable wall 306, 406) via shaft 503 that extends laterally (e.g., along the y-axis). In various embodiments, pin 506 is pivotably coupled to handle 502 via shaft 507 that extends laterally (e.g., in the positive y-direction). In various embodiments, shaft 507 traverses a slot 509 incorporated into the second portion of the handle 502 and extends along a length of the handle 502 in the first direction. In various embodiments, in a locked position, pin 506 is forced upward (e.g., in the positive z-direction), such that pin 506 engages with a slot 508 in the ceiling 520 of the aircraft. In various embodiments, to move to an unlocked position, handle 502 is rotated about shaft 503 in a clockwise direction, which causes shaft 507 to traverse slot 509 in the first direction, thereby forcing the pin 506 downward (e.g., in the negative z-direction), such that pin 506 disengages with a slot 508 in the ceiling 520 of the aircraft.

In various embodiments, handle 512, which may be part of a latching mechanism used by moveable wall 206 (as well as moveable wall 306, 406), includes a first portion that extends in a first direction (e.g., in the positive z-direction), and a second portion that extends in a second direction (e.g., in the positive x-direction), that is perpendicular to the first portion. In various embodiments, handle 512 is pivotably coupled to a panel of a wall (e.g., moveable wall 206) via shaft 513 that extends laterally (e.g., along the y-axis). In various embodiments, pin 516 is pivotably coupled to handle 512 via shaft 517 that extends laterally (e.g., along the y-axis). In various embodiments, shaft 517 traverses a slot 519 incorporated into the second portion of the handle 512 and extends along a length of the handle 512 in the first direction. In various embodiments, in a locked position, pin 516 is forced downward (e.g., in the negative z-direction), such that pin 516 engages with a slot 518 in the floor 525 of the aircraft. In various embodiments, to move to an unlocked position, handle 512 is rotated about shaft 513 in a counterclockwise direction, which causes shaft 517 to traverse slot 519 in the first direction thereby forcing the pin 516 upward (e.g., in the positive z-direction), such that pin 516 disengages with a slot 518 in the floor 525 of the aircraft.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An aircraft lavatory, comprising:
an access door (204, 304) providing access to the aircraft lavatory from at least one of an aisle, a cross aisle, or a passageway of an aircraft, wherein the access door (204, 304) is configured to rotate from a closed position to an open position in a first direction; and
a moveable wall (206, 306, 406) disposed adjacent the access door (204, 304), the moveable wall (206, 306, 406) being configured to rotate from a closed position to an open position in a second direction that is opposite the first direction, the moveable wall (206, 306, 406) being configured to receive and secure the access door (204, 304) while the moveable wall (206, 306, 406) is in the closed position, wherein an opening configured to allow ingress of a mobility device into the aircraft lavatory is created in response to the access door (204, 304) being in the open position and the moveable wall (206, 306, 406) being in the open position.

2. The aircraft lavatory of claim 1, wherein the access door (204, 304) is a slab door, or wherein the access door (204, 304) is a bifold door.

3. The aircraft lavatory of claim 1 or 2, wherein the access door (204, 304) has a first width and the moveable wall (206, 306, 406) has a second width that is smaller than the first width, and optionally wherein the first width is about 18 inches to about 30 inches and the second width is about 9 inches to about 15 inches.

4. The aircraft lavatory of any preceding claim, wherein the access door (204, 304) is configured to be operated independent from the moveable wall (206, 306, 406) such that the access door (204, 304) is configured to rotate to an open position while the moveable wall (206, 306, 406) remains in the closed position.

5. The aircraft lavatory of any preceding claim, wherein the moveable wall (206, 306, 406) includes a latch system configured to secure the moveable wall (206, 306, 406) to a ceiling of the aircraft lavatory and a floor of the aircraft lavatory when the moveable wall (206, 306, 406) is in the closed position.

6. The aircraft lavatory of any preceding claim, wherein the access door (204, 304) is interchangeable between a slab door and a bifold door, or wherein the access door (204, 304) extends in a third direction when in the closed position and the moveable wall (206, 306, 406) extends in the third direction when in the closed position.

7. The aircraft lavatory of any preceding claim, wherein the opening does not allow ingress of the mobility device in response to the access door (204, 304) being in the open position and the moveable wall (206, 306, 406) being in the closed position.

8. An aircraft, comprising:
at least one lavatory, wherein the at least one lavatory includes:
an access door (204, 304) providing access to the at least one lavatory from at least one of an aisle, a cross aisle, or a passageway of the aircraft, wherein the access door (204, 304) is configured to rotate from a closed position to an open position in a first direction; and
a moveable wall (206, 306, 406) disposed adjacent the access door (204, 304), the moveable wall (206, 306, 406) being configured to rotate from a closed position to an open position in a second direction that is opposite the first direction, the moveable wall (206, 306, 406) being configured to receive and secure the access door (204, 304) while the moveable wall (206, 306, 406) is in the closed position, wherein an opening configured to allow ingress of a mobility device into the at least one lavatory is created in response to the access door (204, 304) being in the open position and the moveable wall (206, 306, 406) being in the open position.

9. The aircraft of claim 8, wherein the access door (204, 304) is a slab door, or wherein the access door (204, 304) is a bifold door.

10. The aircraft of claim 8 or 9, wherein the access door (204, 304) has a first width and the moveable wall (206, 306, 406) has a second width that is smaller than the first width, and optionally wherein the first width is about 18 inches to about 30 inches and the second width is about 9 inches to about 15 inches.

11. The aircraft of claim 8, wherein the access door (204, 304) is configured to be operated independent from the moveable wall (206, 306, 406) such that the access door (204, 304) is configured to rotate to an open position while the moveable wall (206, 306, 406) remains in the closed position.

12. The aircraft of claim 8, wherein the moveable wall (206, 306, 406) includes a latch system configured to secure the moveable wall (206, 306, 406) to a ceiling of the at least one lavatory and a floor of the at least one lavatory when the moveable wall (206, 306, 406) is in the closed position.

13. The aircraft of claim 8, wherein the access door (204, 304) is interchangeable between a slab door and a bifold door.

14. The aircraft of claim 8, wherein the access door (204, 304) extends in a third direction when in the closed position and the moveable wall (206, 306, 406) extends in the third direction when in the closed position.

15. The aircraft of claim 8, wherein the opening does not allow ingress of the mobility device in response to the access door (204, 304) being in the open position and the moveable wall (206, 306, 406) being in the closed position.
